# EUROPEAN PATENT APPLICATION

(11) **EP 0 881 027 A1**
(43) Date of publication of application: **02.12.1998**
(21) Application number: 98109475.8
(22) Date of filing: 25.05.1998
(51) Int. Cl.: B23P 19/02, B25B 27/02

(54) **Method and machine for assembling reducers**

(30) Priority: 26.05.1997 IT BO970316
(71) Applicant: BONFIGLIOLI RIDUTTORI S.p.A., I-40012 Lippo di Calderara di Reno (IT)
(72) Inventor: Sandrolini, Franco, 40012 Calderara Di Reno (IT); Ventura, Gabriele, 40050 Monte San Pietro (IT)
(74) Representative: Cerbaro, Elena

(57) **Abstract**

A method of assembling a pinion (4) to the input shaft (3) of a reducer (2), wherein an input portion (2a) of the reducer (2) is positioned at an assembly station (8) with the input shaft (3) of the reducer coaxial with a reference axis (11), and the pinion (4) is fitted to a spindle (14) fitted to the end (13a) of a rod (13) of a hydraulic actuator (10) for moving the pinion (4) axially towards a portion (3a) of the shaft to form an interference fit; a control unit (22) being provided to control, by means of a first sensor (15), the axial displacement of the pinion (4), and, by means of a second sensor (16), at least one value of the compression exerted by the hydraulic actuator (10) during fitment; the control unit (22) also comparing the detected compression value with a corresponding reference value to determine correct fitment.

## Description

The present invention relates to a method of assembling reducers.

As is known, current methods of assembling reducers call for extremely high-cost automated systems, so that production must be restricted to a small number of plants to increase output and reduce cost.

While reducing the manufacturing cost of the reducers, such a solution fails to provide for sufficient flexibility and involves the additional cost of transporting the reducers from the manufacturing plant to the marketing outlet. When long distances are involved, the cost of transport may so increase the final cost of the reducers as to make them unmarketable.

It is an object of the present invention to provide a method of assembling reducers, which does not require high-cost automated systems, provides for a high degree of flexibility, and is ideal for small-scale production.

According to the present invention, there is provided a method of assembling reducers, comprising the steps of:
- positioning an input portion of the reducer at an assembly station, with an input shaft of the reducer coaxial with a given reference axis, and positioning a rotary transmission member outside said assembly station and coaxial with said reference axis;
- moving said rotary transmission member axially towards said input shaft and exerting compression to force said rotary transmission member onto a corresponding portion of the input shaft to form an interference fit;
- determining at least one compression value during displacement of said rotary transmission member; and
- comparing said at least one compression value with a corresponding reference value to determine the outcome of the interference fit between said rotary transmission member and said portion of the input shaft.

The present invention also relates to a machine for assembling reducers.

According to the present invention, there is provided a machine for assembling reducers, characterized by comprising supporting means for supporting at least an input portion of a reducer at an assembly station, so that an input shaft of the reducer is coaxial with a given reference axis; fitting means for maintaining a corresponding rotary transmission member coaxial with said reference axis, and for moving said rotary transmission member axially towards a portion of said input shaft to force, by applying compression, said rotary transmission member onto said portion of the input shaft and form an interference fit; and control means for determining, by means of first sensors, displacement of said rotary transmission member along said reference axis, and, by means of second sensors, at least one compression value; said control means also comparing said at least one compression value with a corresponding reference value to determine fitment according to given assembly specifications.

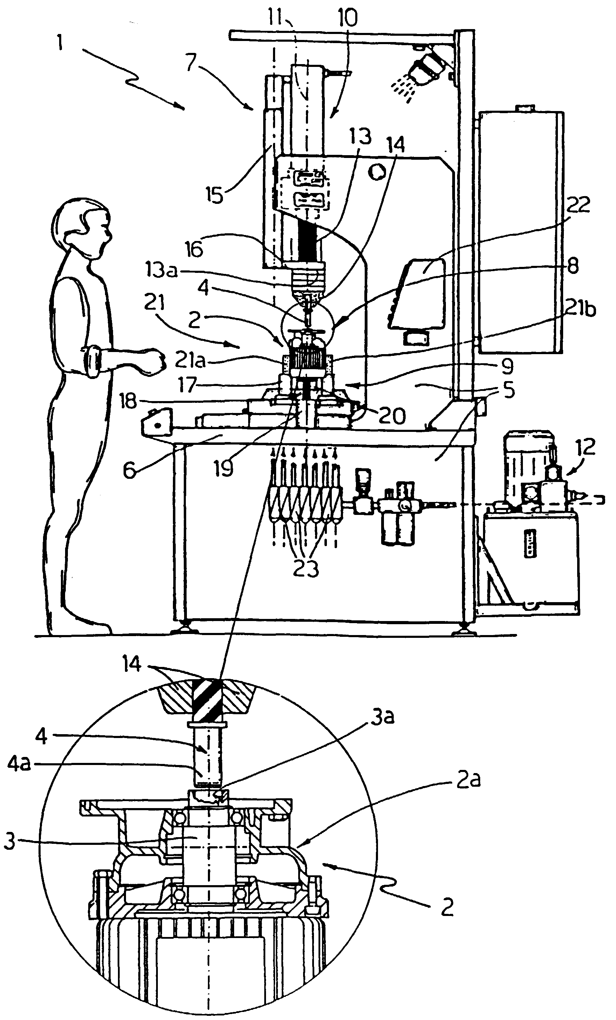

The present invention will be described with reference to the accompanying drawing, which shows a side view, with parts in section and parts removed for clarity, of a reducer assembly machine in accordance with the teachings of the present invention.

Number 1 in the accompanying drawing indicates as a whole a machine tool for assembling known reducers 2.

In particular, some reducers 2 comprise a cylindrical tubular input shaft 3, and machine 1 preferably, but not necessarily, provides for fitting a pinion 4 onto input shaft 3 of reducer 2 to form an interference fit between pinion 4 and an end portion 3a of shaft 3.

Input shaft 3 normally forms part of an input portion 2a of reducer 2, which may be of various types depending on the type of reducer 2. In the example shown, input portion 2a of reducer 2 is defined by a known electric motor, and input shaft 3 by the output shaft of the electric motor.

To form said interference fit, pinion 4 comprises a cylindrical end portion 4a having a diameter approximately equal to but no less than the inside diameter of input shaft 3 of reducer 2

Machine 1 comprises a main supporting frame 5; a horizontal worktable 6 supported by frame 5; a fitting assembly 7 located over worktable 6 at an assembly station 8; and a supporting device 9 located on worktable 6 at station 8.

Fitting assembly 7 comprises a known hydraulic actuator 10 located over station 8 and coaxial with a vertical reference axis 11 intersecting worktable 6 at station 8; and a pressurized-fluid supply unit 12 for selectively supplying pressurized fluid to hydraulic actuator 10, so that the rod 13 of hydraulic actuator 10 is extended towards worktable 6 and maintained coaxial with axis 11.

Fitting assembly 7 also comprises a spindle 14 fitted to a free end 13a of rod 13, and which selectively retains and maintains pinion 4 coaxial with axis 11, with end portion 4a facing worktable 6.

Fitting assembly 7 also comprises two sensors 15 and 16, the first of which for determining the travel of rod 13, and the second of which for determining the compression exerted by rod 13.

In the example shown, sensor 16 is defined by a known load cell (e.g. an AEP load cell, model TC4-127-TN/10T) interposed between spindle 14 and the free end 13a of rod 13; and sensor 15 is defined by a known optical rule (e.g. an ELAP optical rule, model PD360) having two portions movable with respect to each other, a first of which is integral with rod 13 of hydraulic actuator 10, and a second of which is integral with the cylinder of hydraulic actuator 10 and provides for determining, via the first portion, the displacement of rod 13 of hydraulic actuator 10.

Supporting device 9 comprises a supporting frame 17 for supporting input portion 2a of reducer 2 at assembly station 8 with input shaft 3 of input portion 2a coaxial with axis 11; and a stop member 18 against which the end of shaft 3 facing worktable 6 rests when input portion 2a is positioned at assembly station 8. Stop member 18 provides for counteracting the compression exerted by rod 13 on shaft 3 to prevent damaging the rolling bearings on which shaft 3 rotates.

In the example shown, stop member 18 is defined by a known hydraulic actuator 19 located coaxially with axis 11 on worktable 6, and the rod 20 of which is movable axially to and from a work position in which the free end of rod 20 contacts the end of shaft 3 facing worktable 6, when said pressurized fluid is supplied by unit 12.

Supporting device 9 also comprises a hydraulic gripping assembly 21 in turn comprising a pair of jaws located on opposite sides of input portion 2a of reducer 2 at station 8. The jaws, indicated 21a and 21b, are movable to and from a gripping position to grip input portion 2a to frame 17 and keep shaft 3 coaxial with axis 11 when assembling pinion 4.

Machine 1 also comprises a control unit 22 for controlling pressurized fluid supply to hydraulic actuator 10, gripping assembly 21 and hydraulic actuator 19 by means of a number of solenoid valves 23 along the conduits connected to pressurized-fluid supply unit 12. In particular, control unit 22 controls pressurized fluid supply to hydraulic actuator 10 to control the downward movement of rod 13 towards reducer 2 at station 8 as a function of the signals received from sensors 15 and 16.

Control unit 22 also analyzes the signals from sensors 15 and 16 to determine fitment of pinion 4 to shaft 3 according to predetermined assembly specifications.

In the example shown, control unit 22 also controls displacement of stop member 18 to and from said work position.

In a first variation not shown, gripping assembly 21 is movable with respect to worktable 6 to move input portions 2a of reducers 2 successively to and from assembly station 8, while at the same time gripping them to frame 17 when assembling pinion 4.

Operation of machine 1 will now be described assuming no input portion 2a is located at assembly station 8.

In actual use, the operator positions input portion 2a of reducer 2 on frame 17, so that input shaft 3 is coaxial with axis 11, with end portion 3a facing spindle 14, and fits pinion 4 inside spindle 14 so that pinion 4 is coaxial with axis 11, with end portion 4a facing end portion 3a of shaft 3. Once pinion 4 and input portion 2a are positioned, the operator operates gripping assembly 21 to grip input portion 2a to frame 17, and selects, on a control panel of control unit 22, the assembly specifications of the interference fit to be made by machine 1. If necessary, the assembly specifications may be memorized on control unit 22.

Once consent is given by the operator to commence assembly, control unit 22, by means of a solenoid valve 23, controls pressurized fluid supply to hydraulic actuator 19 to move rod 20 into the work position.

Before commencing assembly, control unit 22 determines the position of shaft 3 along axis 11 to determine a "reference travel", i.e. the travel required of rod 13 to position pinion 4 against shaft 3 without damaging the shaft. To determine the "reference travel", control unit 22 controls pressurized fluid supply to hydraulic actuator 10 to extend rod 13 and position pinion 4 against shaft 3 without exerting any compression, and then determines the distance traveled by rod 13 by means of sensor 15.

Once the "reference travel" is determined, control unit 22 determines, as a function of the "reference travel" and the size of end portion 4a of pinion 4, an "assembly travel", i.e. the travel required of rod 13 to drive end portion 4a of pinion 4 inside end portion 3a of shaft 3 without damaging the shaft.

During assembly, control unit 22 controls pressurized fluid supply to hydraulic actuator 10 to perform the "assembly travel" of rod 13 and drive pinion 4 inside shaft 3, and, by means of sensors 15 and 16, monitors the compression exerted by hydraulic actuator 10 as a function of the distance traveled by rod 13 to ensure fitment according to assembly specifications.

In particular, control unit 22 determines in real time the compression exerted by hydraulic actuator 10 in the portion of travel between the "reference travel" and "assembly travel", and indicates correct fitment of pinion 4 to shaft 3 when the compression value at the various points is maintained above a corresponding reference value contained in the assembly specifications.

If the compression detected by sensor 16 is below the reference value, control unit 22 informs the operator that the shaft 3-pinion 4 assembly is defective and must be rejected.

Machine 1 as described above may also be used for assembling pulleys, gears or similar to the input shaft of reducer 2. In which case, the gear may have a central through hole, and the input shaft therefore comprises a projecting end portion to which the gear is fitted.

Pinion 4 may of course be assembled to input shaft 3 by inverting the positions of pinion 4 and input portion 2a of reducer 2 on machine 1, so that input portion 2a is fed towards pinion 4.

The main advantage of machine 1 as described above is that of enabling gears to be assembled quickly and cheaply to reducers 2, so that the final stages in the assembly of reducer 2 may be transferred, with considerable economic advantages, to the place at which reducer 2 is actually marketed. That is, as production of reducers 2 need no longer be restricted to high-cost automated plants, certain components may be produced in the marketing area to reduce transport expenses.

A further advantage of machine 1 as described above is that of enabling small-scale production of reducers with particular mechanical connections, and which would be extremely expensive if produced on large automated systems.

Clearly, changes may be made to the machine as described and illustrated herein without, however, departing from the scope of the present invention.

## Claims

1. A method of assembling reducers (2), comprising the steps of:
- positioning an input portion (2a) of the reducer (2) at an assembly station (8), with an input shaft (3) of the reducer coaxial with a given reference axis (11), and positioning a rotary transmission member (4) outside said assembly station (8) and coaxial with said reference axis (11);
- moving said rotary transmission member (4) axially towards said input shaft (3) and exerting compression to force said rotary transmission member (4) onto a corresponding portion (3a) of the input shaft (3) to form an interference fit;
- determining at least one compression value during displacement of said rotary transmission member (4); and
- comparing said at least one compression value with a corresponding reference value to determine the outcome of the interference fit between said rotary transmission member (4) and said portion (3a) of the input shaft (3).

2. A method as claimed in Claim 1, wherein said step of moving said rotary transmission member (4) comprises the substeps of:
- moving said rotary transmission member (4) axially so as to position it against said portion (3a) of the input shaft (3) without exerting any compression;
- determining, as a function of given assembly specifications, a further axial movement of said rotary transmission member (4) necessary to achieve said interference fit; and
- exerting compression to force said rotary transmission member (4) to perform said further axial movement to achieve said interference fit.

3. A method as claimed in Claim 2, wherein said step of determining at least one compression value is performed in the course of the substep in which compression is exerted to force said rotary transmission member (4) to perform said further axial movement.

4. A machine (1) for assembling reducers (2), characterized by comprising supporting means (9) for supporting at least an input portion (2a) of a reducer (2) at an assembly station (8), so that an input shaft (3) of the reducer (2) is coaxial with a given reference axis (11); fitting means (7) for maintaining a corresponding rotary transmission member (4) coaxial with said reference axis (11), and for moving said rotary transmission member (4) axially towards a portion (3a) of said input shaft (3) to force, by applying compression, said rotary transmission member (4) onto said portion (3a) of the input shaft (3) and form an interference fit; and control means (22) for determining, by means of first sensors (15), displacement of said rotary transmission member (4) along said reference axis (11), and, by means of second sensors (16), at least one compression value; said control means (22) also comparing said at least one compression value with a corresponding reference value to determine fitment according to given assembly specifications.

5. A machine as claimed in Claim 4, wherein said fitting means (7) comprise a hydraulic actuator (10) coaxial with said reference axis (11) and having a rod (13) movable axially to and from said assembly station (8) under the control of said control means (22); said fitting means (7) also comprising a spindle (14) fitted integrally to one end (13a) of the rod (13), and which provides for selectively retaining and maintaining said rotary transmission member (4) coaxial with said reference axis (11).

6. A machine as claimed in Claim 5, wherein said first sensors (15) comprise a detecting device (15) for determining the travel of the rod (13) of said hydraulic actuator (10).

7. A machine as claimed in Claim 6, wherein said detecting device (15) is a known optical rule (15).

8. A machine as claimed in Claim 5, wherein said second sensors (16) comprise a load cell interposed between said spindle (14) and said end (13a) of the rod (13).

9. A machine as claimed in any one of the foregoing Claims from 1 to 8, wherein said supporting means (9) comprise a gripper assembly (21) for gripping the reducer (2) at said assembly station (8).

10. A machine as claimed in any one of the foregoing Claims from 4 to 9, wherein said supporting means (9) comprise a stop member (18) resting against said input shaft (3) on the opposite side of the input shaft (3) to said rotary transmission member (4); said stop member counteracting the compression exerted by the hydraulic actuator (10) to keep the input shaft (3) inside the reducer (2) when fitting the rotary transmission member (4) to the input shaft (3).
